# EUROPEAN PATENT APPLICATION

(11) **EP 2 327 527 A1**
(43) Date of publication of application: **01.06.2011**
(21) Application number: 09815958.5
(22) Date of filing: 24.04.2009
(51) Int. Cl.: B29C 39/10, B29C 39/22, B29C 39/44, G02B 3/00, B29L 11/00

(54) **APPARATUS AND METHOD FOR MANUFACTURING WAFER LENS**

(30) Priority: 25.09.2008 JP 2008245616
(71) Applicant: Konica Minolta Opto, Inc., Hachioji-shi Tokyo 192-8505 (JP)
(72) Inventor: SAITO, Masashi, Hachioji-shi Tokyo 192-8505 (JP)
(74) Representative: Henkel, Feiler & Hänzel
(86) International application number: PCT/JP2009/058157
(87) International publication number: WO 2010/035540

(57) **Abstract**

Deterioration of transfer characteristics from a molding die to a resin is suppressed. A method for manufacturing a wafer lens is provided with: a first step of moving a glass substrate (3), which has a photo-curable resin (5A) dropped thereon, to a predetermined position with respect to a sub-master (20) by controlling the position of the glass substrate (3), and holding the glass substrate (3) at such predetermined position; a second step of irradiating the photo-curable resin (5A) with light; and a third step of holding the pressing force of the glass substrate (3) to the sub-master (20) at a predetermined pressure by pressure-controlling the glass substrate (3).

## Description

### TECHNICAL FIELD

The present invention relates to a manufacturing apparatus and manufacturing method of a wafer lens.

### BACKGROUND ART

Conventionally, in the manufacturing field of an optical lens, examined is a technique to obtain an optical lens with high heat resistance by providing a lens portion composed of a hardenable resin to a glass substrate (for example, refer to Patent Document 1). As an example of the manufacturing method of an optical lens with the application of this technique, proposed is a method of forming a plurality of optical lenses composed of a hardenable resin on a glass substrate which is a so-called "a wafer lens" and thereafter cutting the glass substrate for each lens portion.

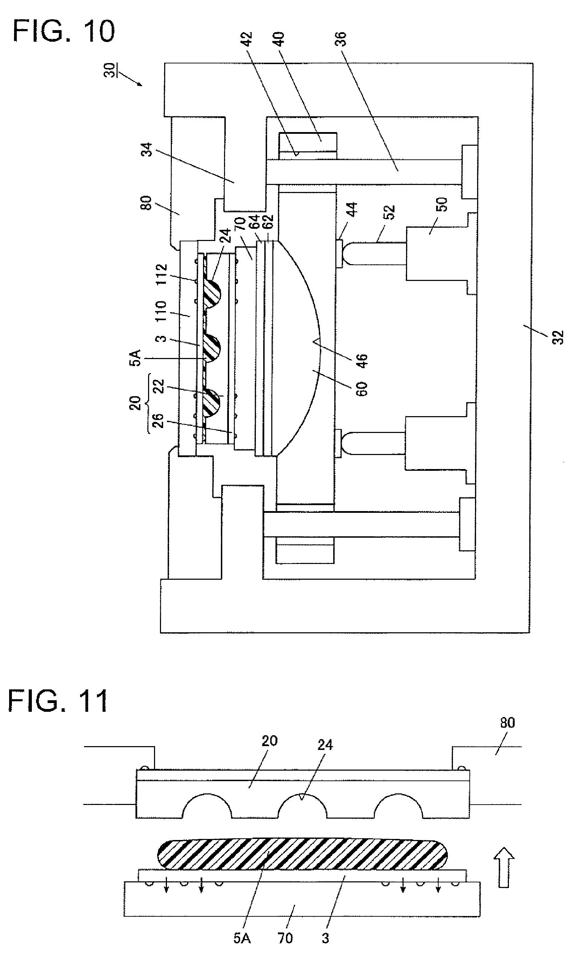

The manufacturing method of a wafer lens in the case of employing a light hardenable resin as a hardenable resin is explained briefly as follows. As shown in Fig. 11, a glass substrate 3 on which a resin 5A has been dropped is sucked and fixed on a vacuum chuck device 70 and then moved upward by the vacuum chuck device 70 toward a molding die 20 arranged above the glass substrate 3, whereby the resin 5A is pressed on the molding die 20 (refer to an arrow mark). The molding die 20 is a light transmissive mold having cavities 24, and is held by and fixed on a stamp holder 80.

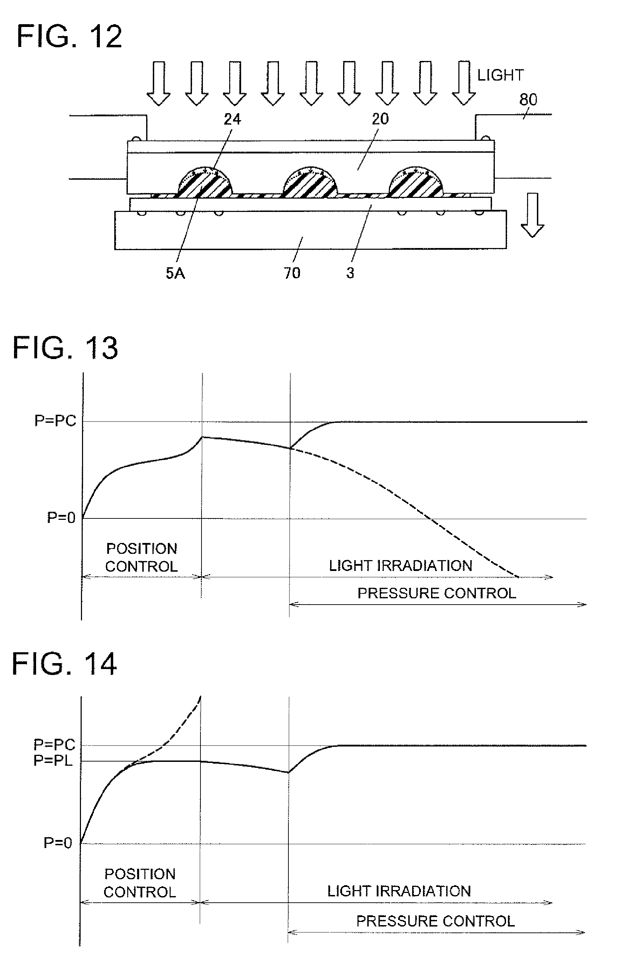

Then, as shown in Fig. 12, while the position of the glass substrate 3 with a height is being held as it is, light is irradiated to the resin 5A filled up in the cavities 24 from the upper portion of the molding die 20 so that the resin 5A is hardened. Thereafter, while the glass substrate 3 is being moved downward, the resin 5A is released from the molding die 20. As a result, a wafer lens in which a plurality of lens portions (5A) is formed on the glass substrate 3 can be manufactured.

### PRIOR ART DOCUMENT

### PATENT DOCUMENT

Patent Document 1: Patent No. 3926380 official report

### SUMMARY OF THE INVENTION

### PROBLEMS TO BE SOLVED BY THE INVENTION

However, in the process of hardening the resin 5A by irradiating light in Fig. 12, the resin 5A may cause shrinkage by being irradiated with light. In this case, in the conventional manufacturing method represented by Fig. 11 and Fig. 12, the glass substrate 3 is merely moved upward to a predetermined height and the glass substrate is held at the position. Therefore, even if the configuration of the cavities is precisely transferred onto the resin 5A as illustrated at the section of the cavities in Fig. 12 before the irradiating of light, since the resin 5A shrink during or after the irradiating of light, there is possibility that the transferability from the molding die 20 to the resin 5A lowers (there is possibility that the lens configuration of the lens portion deviates from the design value).

Therefore, a main object of the present invention is to provide a wafer lens manufacturing apparatus and manufacturing method which can suppress the lowering of the transferability from a molding die to resin.

### MEANS FOR SOLVING THE PROBLEMS

The first embodiment of a wafer lens manufacturing apparatus for solving the above problems is a manufacturing apparatus of wafer lens having a plurality of lens portions made of a light hardenable resin on one surface of a substrate, and the manufacturing apparatus is characterized by comprising:
a molding die holding means for holding a molding die having a plurality ofmolding die surfaces corresponding to an optical surface configuration ofthe abovementioned lens portions;
a substrate holding means for holding the abovementioned substrate;
a resin arranging means for arranging a light hardenable resin on at least one of one surface of the substrate and the molding surfaces of the abovementioned molding die;
a moving means for moving the abovementioned molding die relatively to the one surface of the substrate;
a pressure detecting means for detecting a pressing force caused on the substrate by the movement of mowing means through the light hardenable resin arranged against the molding die;
a light irradiating means for irradiates light to advance the hardening of the light hardenable resin; and
a pressure control means for controlling the pressing force which changes in according with the hardening of the light hardenable resin which progresses with the light irradiation, based on the detection result of the above-mentioned pressure detecting means.

The second embodiment of the wafer lens manufacturing apparatus for solving the abovementioned problems is characterized in that the above-mentioned pressure control means controls to hold the pressing force at a predetermined constant pressure value.

The third embodiment of the wafer lens manufacturing apparatus for solving the abovementioned problems is characterized in that the above-mentioned pressure control means controls to make the pressing force to a predetermined constant pressure value or less.

The fourth embodiment of the wafer lens manufacturing apparatus for solving the abovementioned problems is characterized in that the manufacturing installation comprises a position detecting means for detecting the position of the substrate, the relative position of the molding die to one surface of the substrate by the moving means is held at a predetermined position based on a detection result of the position detecting section, and the above-mentioned pressure control means conducts pressure control at the predetermined position.

The fifth embodiment of the wafer lens manufacturing apparatus for solving the abovementioned problems is characterized in that the pressure control by the pressure control means is an ON and OFF control to control preliminarily-set multiple pressure values stepwise.

The sixth embodiment of a wafer lens manufacturing method for solving the abovementioned problems is a manufacturing method of wafer lens having a plurality of lens portions formed by molding and hardening a light hardenable resin on one surface of a substrate, and the manufacturing method is characterized by comprising:
an arranging process for arranging a light hardenable resin on at least one of molding surfaces of a molding die having a plurality of molding surfaces corresponding to an optical configuration of the lens portions and one surface of the substrate;
a pressing process for pressing the substrate through the light hardenable resin arranged against the molding die by moving the molding die relatively against one surface of the substrate;
a light irradiating process for irradiating light to advance the hardening of the light hardenable resin; and
a pressure control process for controlling the pressing force in the pressing process which changes in according with the hardening of the light hardenable resin which progresses with the light irradiation.

The seventh embodiment of a wafer lens manufacturing method for solving the abovementioned problems is characterized in that in the abovementioned pressure control process, the pressing force is controlled so as to be held at a predetermined constant pressure value.

The eighth embodiment of a wafer lens manufacturing method for solving the abovementioned problems is characterized in that in the above-mentioned pressure control process, the pressing force is controlled to be made to a predetermined constant pressure value or less.

### EFFECT OF THE INVENTION

According to the wafer lens manufacturing apparatus and manufacturing method of the present invention, since the pressing force of the molding die to the substrate which changes due to hardening caused by the light irradiation against a light hardenable resin is controlled, even if the light hardenable resin shrinks, it becomes possible to suppress the lowering of the transferability from the molding die to the light hardenable resin.

### BRIEF DESCRIPTION OF THE DRAWINGS

Fig. 1 is a perspective view showing an outline structure of a wafer lens relating to Embodiment 1.
Fig. 2 is a drawing showing an outline structure of water lens manufacturing apparatus relating to Embodiment 1 and is a drawing showing a condition before a molding die (sub master) is filled up with resin.
Fig. 3 is a perspective view showing an outline structure of a sub master (molding die) relating to Embodiment 1.
Fig. 4 is a perspective view showing an outline structure of a master (mother die) of the sub master of Fig. 3.
Fig. 5 is a block diagram for explaining schematically a control constitution of the wafer lens manufacturing apparatus relating to Embodiment 1.
Fig. 6 is a drawing showing an outline structure of a wafer lens manufacturing apparatus relating to Embodiment 1 and is a drawing showing a condition when a molding die (sub master) has been filled up with resin.
Fig. 7 is a drawing in which a part of Fig. 2 is expanded.
Fig. 8 is a drawing in which a part of Fig. 6 is expanded.
Fig. 9 is a drawing showing an outline structure of a wafer lens manufacturing apparatus relating to Embodiment 2 and is a drawing showing a condition before a molding die (sub master) is filled up with resin.
Fig. 10 is a drawing showing an outline structure of a wafer lens manufacturing apparatus relating to Embodiment 2 and is a drawing showing a condition when a molding die (sub master) has been filled up with resin.
Fig. 11 is a drawing for explaining schematically prior art and is a drawing showing a condition before a molding die is filled up with resin.
Fig. 12 is a drawing for explaining schematically prior art and is a drawing showing a condition when a molding die has been filled up with resin.
Fig. 13 is a drawing showing change of pressure for resin when a stage is held with a predetermined height.
Fig. 14 is a drawing showing change of pressure for resin when a pressing force is set at a predetermined pressure or less.
Fig. 15 is a drawing showing change of pressure for resin when a pressing force is set to pressure values in multiple stages in accordance with the progress of hardening of resin.
Fig. 16 is a drawing showing change of pressure for resin when an ON and OFF pressure control is conducted multiple times such that a pressing force is controlled to become desired pressure values stepwise.

### EMBODIMENT FOR CARRYING OUT THE INVENTION

Next, desirable embodiments of the present invention will be described with reference to drawings.

### EMBODIMENT

### [EMBODIMENT 1]

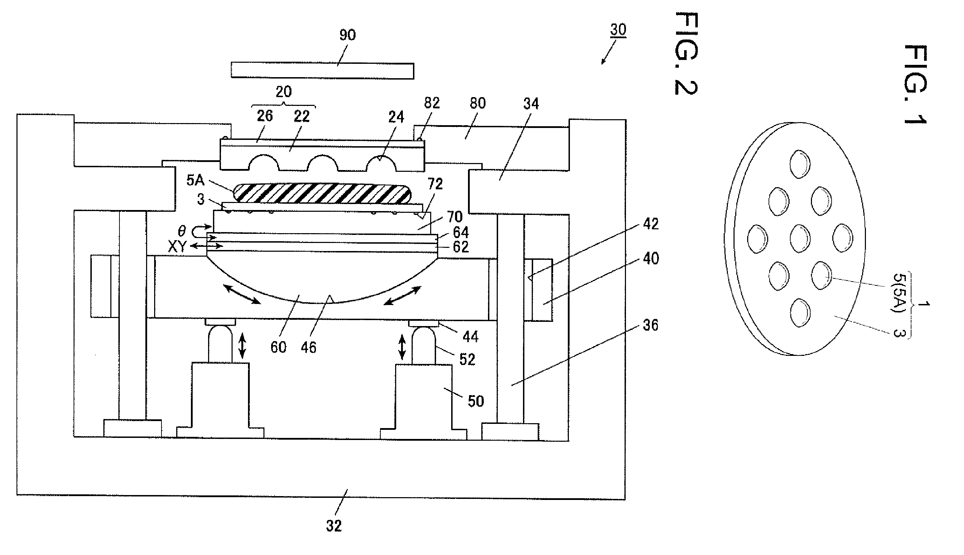

As shown in Fig. 1, a wafer lens 1 comprises a circle-shaped glass substrate 3 and two or a plurality of lens portions 5. The glass substrate 3 is an example of a substrate. On the surface of the glass substrate 3, the plurality of convex lens portions 5 are arranged in an array form. On a surface of an optical surface of a convex lens portion 5, microscopic structures such as diffractive grooves and stepped portions may be formed.

The convex lens portion 5 is made of a resin 5A. The resin 5A is a light hardenable resin. As such a light hardenable resin, for example, an acrylic resin, an allyl ester resin, and the like may be employed, and these resins can be hardened by the reaction of radical polymerization. As another light hardenable resin, for example, an epoxy type resin may be employed and such a resin can be hardened by the reaction of cationic polymerization.

Next, the following explanation is made about a wafer lens manufacturing apparatus (30) used at the time of manufacturing a wafer lens 1.

As shown in Fig. 2, the wafer lens manufacturing apparatus 30 comprises a base 32. On an upper portion of the base 32, formed is a protrusion section 34 which protrudes toward inside. Guides 36 are provided so as to stand between a floor portion of the base 32 and the protrusion section 34. Between the guides, a stage 40 is provided. The stage 40 is provided with through holes 42 and the guides 35 are arranged so as to pass through the respective through holes 42.

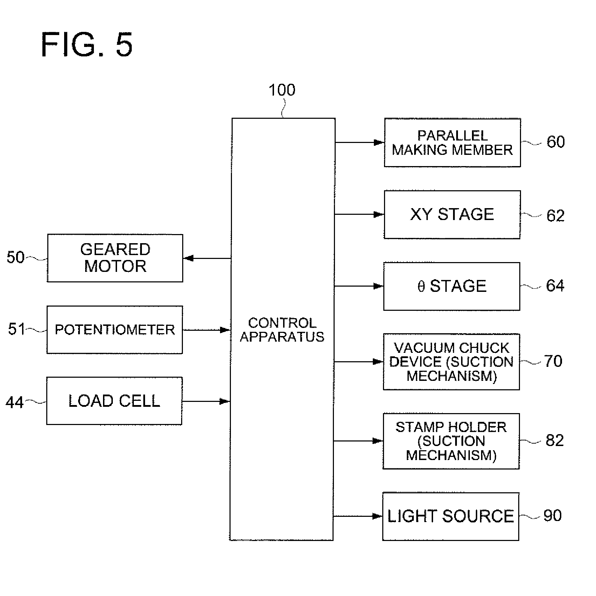

On the base 32 and beneath the stage 40, geared motors 50 are provided. The geared motors 50 incorporate a potentiometer 51 (refer to Fig. 5) respectively. Further, each of the geared motors 50 is linked with a shaft 52. On the lower side of the stage 40, load cells 44 are provided such that the load cells 44 are brought in contact with the tip ofthe shafts 52 by the weight of the stage 40. In the wafer lens manufacturing apparatus 30, the shafts 52 are adapted to move upward and downward by the operation of the geared motors 50, and with this movement, the stage 40 can be moved upward and downward while being guided with guides 36.

On the stage 40, formed is a concave portion 46 which is shaped in almost a hemisphere configuration. In the concave portion 46, a parallel making member 60 is embedded. The parallel making member 60 is adapted to be able to oscillate in the concave portion 46 as with a bowl floating on water surface. On the parallel making member 60, provided are a XY stage 62 and a θ stage 64. The XY stage 62 is adapted to be movable on a XY flat surface (a two-dimensional flat surface), and the θ stage 64 is adapted to be rotatable around its central portion as a rotation axis.

On the XY stage 62 and the θ stage 64, a vacuum chuck device 70 is installed. On the vacuum chuck device 70, communicating grooves 72 are formed in concentric circles. To the communicating grooves 72, a suction mechanism (not shown in the drawing) is connected such that air is sucked through the communicating grooves 72 by the operation of the suction mechanism, whereby a member is attracted and fixed on the vacuum chuck device 70. In this embodiment, a glass substrate 3 is attracted and fixed by the vacuum chuck device 70.

On an upper portion of the base 32, a stamp holder 80 is fixed. To the stamp holder 80, a light transmissive sub master 20 (molding die) is adapted to be fixed. More in detail, on end portions of the stamp holder 80, communicating grooves 82 are formed in concentric circles and, to the communicating grooves 82, a suction mechanism (not shown in the drawing) is connected. As with the time that the vacuum chuck device 70 operates, when the suction mechanism operates, air is sucked through the communicating grooves 82, whereby the sub master 20 is attracted and fixed to the stamp holder 80. Above the sub master, a light source 90 is provided such that when the light source is turned on, light is irradiated toward the sub master 20.

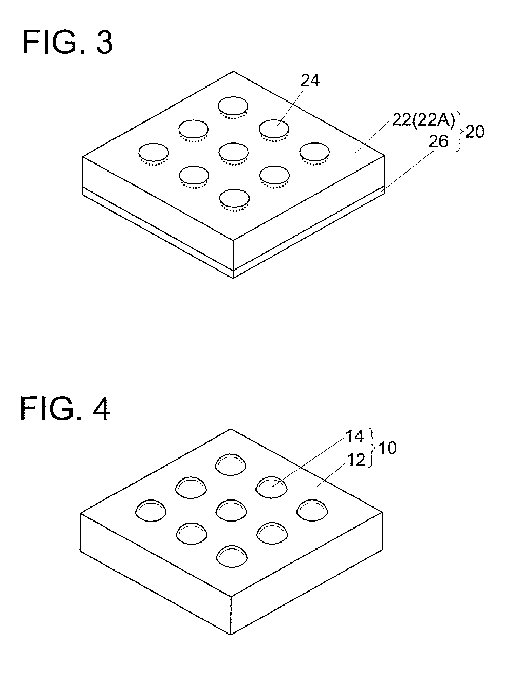

As shown in Fig. 2 and Fig. 3, the sub master 20 mainly is composed of a molding section 22 and a base material 26. On the molding section 22, a plurality of cavities (concave portions) is shaped in an array form.

The surface (die surface) configuration of each of the cavities 24 is made a negative configuration corresponding to a convex lens portion 5 in a wafer lens 1. Therefore, in this drawing, the surface configuration is made concave in an approximately hemisphere configuration.

The molding section 22 is made of a resin 22A. As the resin 22A, preferable is a resin with a good mold-release characteristic, especially preferable is a transparent resin. Such a resin is excellent in a point capable of releasing a mold without the application of a mold releasing agent. As such a resin 22A, any one of a light curable resin, a thermo-hardening resin, and a thermoplastic resin may be employable.

The base material 26 is used as a lining material such that in the case where only the molding section 22 of the sub master 20 is inferior in strength, the base material 26 pasted on the molding section 22 increase the strength of the sub master 20 so as to allow the sub master 20 to conduct molding repeatedly.

The base material 26 may be structured with a different material from the molding section 22, or may be structured integrally with the same material as the molding section 22. In the case where the base material 26 is structured with a different material from the molding section 22, as the material of the base material 26, any materials having smoothness, such as quartz, silicon wafer, metal, glass, resin, ceramics, and the like may be employed. Here, to structure the base material 26 integrally with the same material as the molding section 22 is to constitute the sub master 20 only with the molding section 22.

In the manufacturing of a wafer lens 1 (the molding of convex lens portions 5), the sub master 20 shown in Fig. 3 is mainly used. However, in addition, a master 10 shown in Fig. 4 is also used. That is, the master 10 is a mother die used at the time of manufacturing the sub master 20, and the sub master 20 is a molding die used at the time of molding a wafer lens 1 (convex lens portions 5). The sub master 20 is used two or more times for mass-manufacturing a wafer lens 1, and is different from a master 10 in terms of the purpose of use, frequency in use, and the like.

As shown in Fig. 4, in the master 10, a plurality of convex portions 14 are formed in an array form on a base section 12 shaped in a rectangular body. The convex portions 14 are portions corresponding to the convex lens portions 5 of the wafer lens 1, and are protruded in an approximately hemisphere configuration respectively. The outline shape of the master 10 may be a rectangular in this way, or may be a circular.

The surface (die surface) configuration of each of the convex portions 14 is made a positive configuration corresponding to the optical surface configuration of each of convex lens portions 5 which are molded and transferred on a glass substrate 3.

As a material of the master 10, in the case where an optical surface configuration is created with mechanical processing such as cutting, grinding, and the like, metal or metallic glass may be employed. As a classification of the material, iron-based materials and their alloys may be employed. Examples of the iron-based materials include hot die steel, cold die steel, plastic die steel, high-speed tool steel, rolled steel for general structure, carbon steel for machine structure, chrome molybdenum steel, stainless steel and the like. In the above, examples of the plastic die steel include pre-hardened steel, quenched tempered steel, and aging treated steel. Examples of the pre-hardened steel include a SC type steel, a SCM type steel, and a SUS type steel. More concretely, examples of the SC type steel include PXZ, examples of the SCM type steel include HPM2, HPM7, PX5, and IMPAX, and examples of the SUS type steel include HPM38, HPM77, S-STAR, G-STAR, STAVAX, RAMAX-S, and PSL. Further, examples of the iron-based alloy are disclosed in Japanese Unexamined Patent Publication No. 2005-113161 and Japanese Unexamined Patent Publication No. 2005-206913. As nonferrous alloys, mainly copper alloy, aluminum alloy, and zinc alloy are known well. Examples of the nonferrous alloys include the alloys disclosed in Japanese Unexamined Patent Publication No. 10-219373 and Japanese Unexamined Patent Publication No. 2000-176970. As materials of metallic glass, PdCusi, PdCuSiNi, and the like are preferable, because their machinability is high so that the wear of a tool is little. Further, amorphous alloys, such as electroless or electrolytic nickel phosphorus plate are preferable, because their machinability in a diamond cutting is good. Such high machinable materials may be used to constitute an entire body of the master 10, or may cover only a surface of specifically an optical transfer surface by a method, such as plating and spattering.

As shown in Fig. 5, the load cells 44, the geared motors 50, the potentiometers 51, the parallel making member 60, the XY stage 62, the θ stage 64, the vacuum chuck device 70 (suction mechanism), the stamp holder (suction mechanism), and the light source 90 are connected to a control apparatus 100. The control apparatus 100 is adapted to control the operations of these components. Specifically, in this embodiment, the control apparatus 300 is adapted to control the operation (rotation) of the geared motors 50 based on the output value of the load cells 44 and the potentiometers 51.

Subsequently, a manufacturing method of a wafer lens 1 by the use of the wafer lens manufacturing apparatus 30 will be explained.

As shown in Fig. 2, first, while the sub master 20 is made to be attracted and fixed to the stamp holder 80, the glass substrate 3 is mounted on the vacuum chuck device 70, and further, air is sucked through the connection groove 72 so that the glass substrate 3 is made to be attracted and fixed on the vacuum chuck device 70. Successively, a predetermined amount of a resin 5A is dropped on the glass substrate 3. Then, the parallel making member 60, the XY stage 62, and the θ stage 64 are controlled by the control apparatus 100 in such a way that a lower surface of the sub master 20 and a top surface of the glass substrate 3 are made parallel (preliminary process).

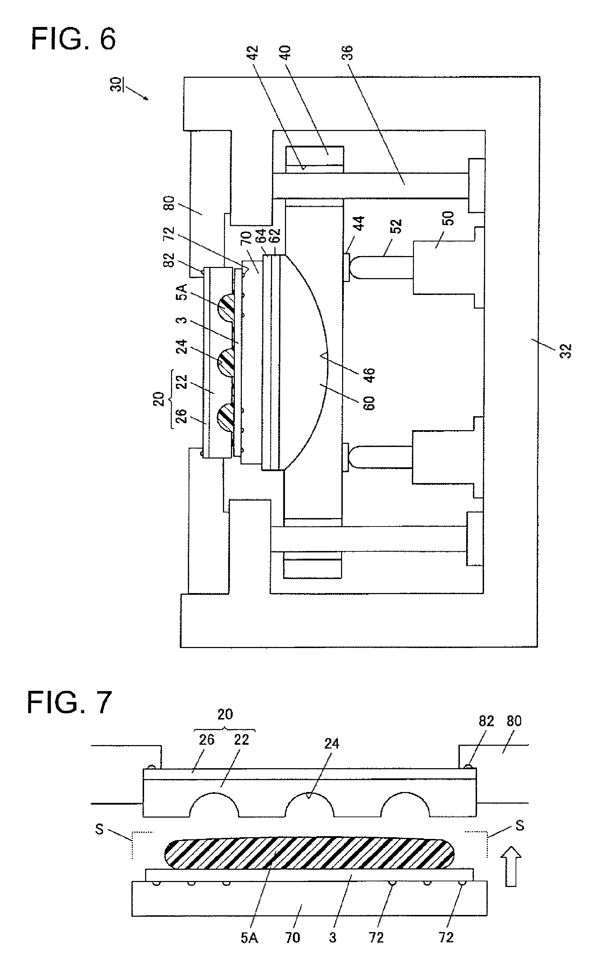

In this status, as shown in Fig. 6, the position of the glass substrate 3 is controlled such that the glass substrate 3 is moved to a specified position in relation to the sub master 20 and the glass substrate 3 is held at the specified position

More in detail, the geared motors 50 are operated to extend a shaft 52 upward so as to move a stage 40 upward. In this case, the control apparatus 100 controls the operation of the geared motors 50 based on the output value of the potentiometers 51 such that the stage 40 is moved upward to a position with a predetermined height

In the wafer lens manufacturing apparatus 30, the position with the predetermined height of the stage 40 to be moved upward is set beforehand in the control apparatus 100. Accordingly, as shown in Fig. 7, the control apparatus 100 operates the geared motors 50 until the vacuum chuck device 70 arrives at a reference position S, and when the vacuum chuck device 70 has arrived at the reference position S, the control apparatus 100 stop the operating of the geared motors 50 (position control process).

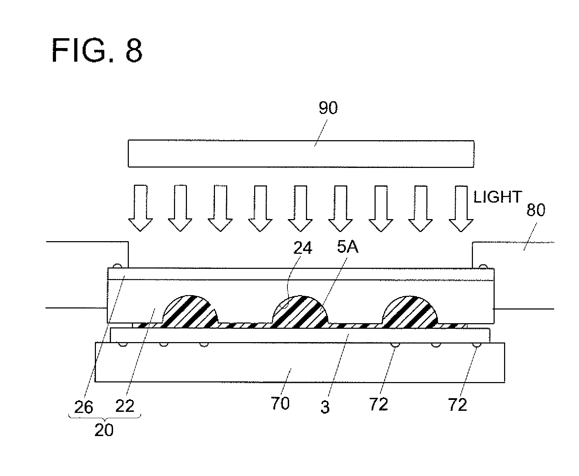

As a result, the resin 5A spreads gradually in response to the pressing force of the glass substrate 3, and as shown in Fig. 6, the resin 5A is filled up in the cavities 24 of the sub master 20. Then, while the stage 40 is kept being held at a location corresponding to the reference position S, the light source 90 is made to turn on in such a way that as shown in Fig. 8, light is irradiated to the resin 5A through the light transmissive sub master 20, whereby the resin 5A is hardened (light irradiating process).

Here, at the time that the resin 5A is hardened (during the hardening of the resin 5A or thereafler), if the stage 40 is kept being held at the position with the predetermined height, when the hardened resin 5A shrinks, the glass substrate 3 does not follow the shrinkage. As a result, there is a possibility that distortion may be caused inside the resin 5A, or the surface configuration of the cavities 24 may be transferred insufficiently to the resin 5A. That is, owing to change in the pressing force due to the shrinkage, the transfer of the surface configuration may become insufficient.

Incidentally, Fig. 13 shows change of the pressure to the resin 5A when the stage 40 is held at the position with the predetermined height after the abovementioned position control.

As can be understood from this, if the stage 40 is merely kept being held at the position with the predetermined height, hardening shrinkage arises as the resin is being hardened in the light irradiating process, whereby the pressure becomes lower as shown with a broken line. As a result, since the molded surface does not fit sufficiently to the molding die, the transferability may be deteriorated, or birefringence may be caused inside by residual stress so that an optical characteristic may be degraded.

Then, in this embodiment, if the light source 90 has been made to turn on for a predetermined time period so as to irradiate a predetermined amount of light to the resin 5A, the glass substrate 3 is subjected to pressure control in such a way that the pressing force of the glass substrate 3 to the sub master 20 is held at a predetermined pressure. With this, as shown in Fig. 14, for example, the pressure is controlled to be held at a predetermined pressure (PC), whereby the above problems can be suppressed.

As can be seen from Fig. 6 and Fig. 8, since the resin 5A is provided between the glass substrate 3 and the sub master 20, the pressing force of the glass substrate 3 to the sub master 20 substantially means herein the pressing force to press the resin 5A toward the sub master 20.

More in detail, the geared motors 50 are operated again so as to extend a shaft 52 upward and to move the stage 40 upward. In this case, the control apparatus 100 controls the operation of the geared motors 50 based on the output value of the load cells 44 so that the stage 40 is moved upward while the pressing force of the stage 40 to the sub master 20 is being held at a predetermined pressure.

In the wafer lens manufacturing apparatus 30, the pressing force ofthe stage 40 to the sub master 20 is set beforehand in the control apparatus 100 in such a way that he control apparatus 00 controls the operation of the geared motors 50 based on the output value received from the load cells 44 so that the pressing force of the stage 40 to the sub master 20 is held at the predetermined pressure (pressure control process).

In this case, the control apparatus 100 also controls the parallel making member 60, the XY stage 62, and the θ stage 64 based on the output value of the potentiometers 51 and the load cells 44 so that the parallelism between the glass substrate 3 and the sub master 20 the equal load to the resin 5A are held at a constant respectively.

Thereafter, the light source 90 is made to switch off to stop irradiating light to the resin 5A. The light irradiation to the resin 5A may be stopped before the pressure control process. Then, the geared motors 50 are operated to retract the shafts 52 downward so as to move the stage 40 downward, whereby the hardened resin 5A is released together with the glass substrate 3 from the sub master 20 (release process). As a result, the wafer lens 1 in which a plurality af convex lens portions 5 is formed on the glass substrate 3 can be manufactured.

According to this embodiment mentioned above, at the stage before light is irradiated to the resin 5A, the glass substrate 3 is subjected to a position control in such a way that the vacuum chuck device 70 is moved upward to the reference position S based on the output value of the potentiometers 51 and held at the reference position S. On the other hand, at the stage after light has been irradiated to the resin 5A, the glass substrate 3 is subjected to a pressure control (load control) in such a way that the pressing force of the stage 40 to the sub master 20 is held at a predetermined pressure based on the output value of the load cells 44. Namely, the control of the glass substrate 3 is changed from the position control to the pressure control before and after the light irradiation to the resin 5A.

Therefore, owing to the light irradiation to the resin 5A, even if the resin 5A causes hardening shrinkage, the resin 5A can be compulsorily pressed with a predetermined pressure toward the cavities 24 of the sub master 20 while following the volume change of the resin 5A. As a result, it becomes possible to suppress the following problems, distortion is caused inside the resin 5A, and the surface configuration of the cavities 24 is transferred insufficiently to the resin 5A. Accordingly, it becomes possible to suppress the lowering of the transferability from the cavities of the sub master 20 to the resin 5A.

### [MODIFIED EMBODIMENT 1]

In the position control process, the position control and the pressure control for the glass substrate 3 may be conducted simultaneously. That is, when the glass substrate 3 is moved to a specified position, the glass substrate 3 is subjected to a pressure control such that the pressing force of the glass substrate 3 to the sub master 20 is held below a predetermined pressure.

The reason is that when a resin with high viscosity, for example, a resin material having a viscosity of 10000 mPa·S or more is employed, in the case where a pressure control is not performed, there is a problem that since a pressure becomes high too much as shown with a broken line in Fig. 14, the sub master may deform or pressure distribution in the resin may become uneven. Then, with a pressure control that the rising speed of the stage is made slow so as to prevent beforehand the pressing force from becoming a predetermined pressure (PL) or more, such a problem may be suppressed.

Such a speed control may be performed not only in the stage of the abovementioned pressure control at the time of pressing but also in the stage of the position control, with this, it may be possible to obtain the effect that the unevenness of resin can be suppressed.

More in detail, in addition to the control that the control apparatus 100 controls the movement of the stage 40 based on the output value of the potentiometers 51, the control apparatus 100 controls the operation of the geared motors 50 while always referring the output value of the load cells 44 such that the pressing force of the stage 40 to the sub master 20 is held at a predetermined pressure or less. In this case, it is possible to prevent the resin 5A from being applied with a load more than needed, whereby the deformation of the sub master 20 can be prevented surely.

### [MODIFIED EMBODIMENT 2]

In the pressure control process, the operation of the geared motors 50 may be controlled on real time basis based on the output value of the load cells 44. Namely, a predetermined pressing force set beforehand for the control apparatus 100 is made as a threshold value, and when the control apparatus 100 receives the output value of the load cells 44, if the output value becomes the threshold value or more, the operation of the geared motors 50 is stopped, and then if the output value of the load cells 44 becomes less that threshold value, the operation of the geared motors 50 is resumed.

### [EMBODIMENT 2]

Embodiment 2 differs from Embodiment 1 in respect of the following points, and is made as the same as Embodiment 1 other than the points.

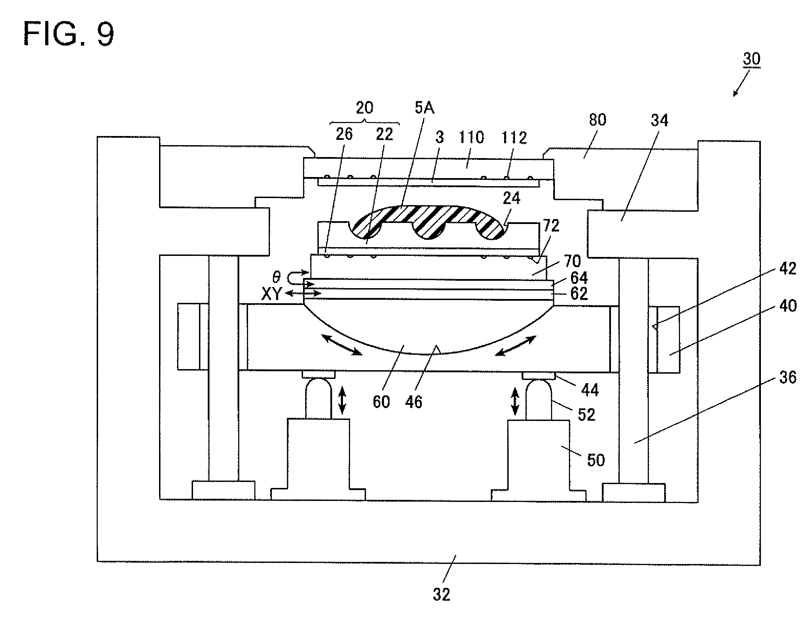

In this Embodiment 2, the installation position of the glass substrate 3 and the installation position of the sub master 20 are reversed. More in detail, as shown in Fig. 9, a sub master 20 is attracted and fixed to a vacuum chuck device 70. A vacuum chuck device 110 is fixed to the protrusion portion 34 of the base 32. The vacuum chuck device 110 is constructed with a light transmissive member, and when a light source 90 is made to turn on, light is adapted to transmit through the vacuum chuck device 110. On the vacuum chuck device 110, communicating groove 112 are formed in a form of concentric circles. To the communicating grooves 112, a suction mechanism (not shown in the drawing) is connected such that air is sucked through the communicating grooves 112 by the operation of the suction mechanism, whereby a member is attracted and fixed under the vacuum chuck device 110. In this embodiment, a glass substrate 3 is attracted and fixed by the vacuum chuck device 110. The vacuum chuck device 110 (suction mechanism) is connected to the control apparatus 100 so that its operation is controlled by the control apparatus 100.

At the time of manufacturing the wafer lens 1 by the use of the wafer lens manufacturing apparatus 30 relating to this embodiment 2, in a preliminary process, the glass substrate 3 is installed to the vacuum chuck device 110, and the sub master 20 is installed to the vacuum chuck device 70, and then a predetermined amount of the resin 5A is dropped on the sub master 20.

In the position control process, as shown in Fig. 10, the sub master 20 is subjected to the position control in such a way that the sub master 20 is moved to a specified position in relation to the glass substrate 3, and the sub master 20 is held at the specified position (the mechanical operations in this case are the same as those in Embodiment 1 fundamentally).

In the light irradiating process, light is irradiated to the resin 5A through the light transmissive vacuum chuck device 110 and the glass substrate 3 so as to harden the resin 5A.

In the pressure control process, the sub master 20 is subjected to the pressure control such that the pressing force of the sub master 20 to the glass substrate 3 is held at a predetermined pressure (the mechanical movements in this case are the same as those in Embodiment 1 fundamentally).

According to this embodiment mentioned above, the installation position of the glass substrate 3 and the installation position of the sub master 20 are reversed, and the control of the sub master 20 is changed from the position control to the pressure control before and after the light irradiation to the resin 5A. Even in this case, as with Embodiment 1, it becomes possible to suppress the following problems, distortion is caused inside the resin 5A, and the surface configuration of the cavities 24 is transferred insufficiently to the resin 5A. Accordingly, it becomes possible to suppress the lowering of the transferability from the cavities of the sub master 20 to the resin 5A.

### [MODIFIED EMBODIMENT 1]

In the position control process, the position control and the pressure control for the sub master 20 may be conducted simultaneously. That is, when the sub master 20 is moved to a specified position, the sub master 20 is subjected to a pressure control such that the pressing force of the sub master 20 to the glass substrate 3 is held below a predetermined pressure (the mechanical movements in this case are the same as those in Modified Embodiment 1 in Embodiment 1 fundamentally).

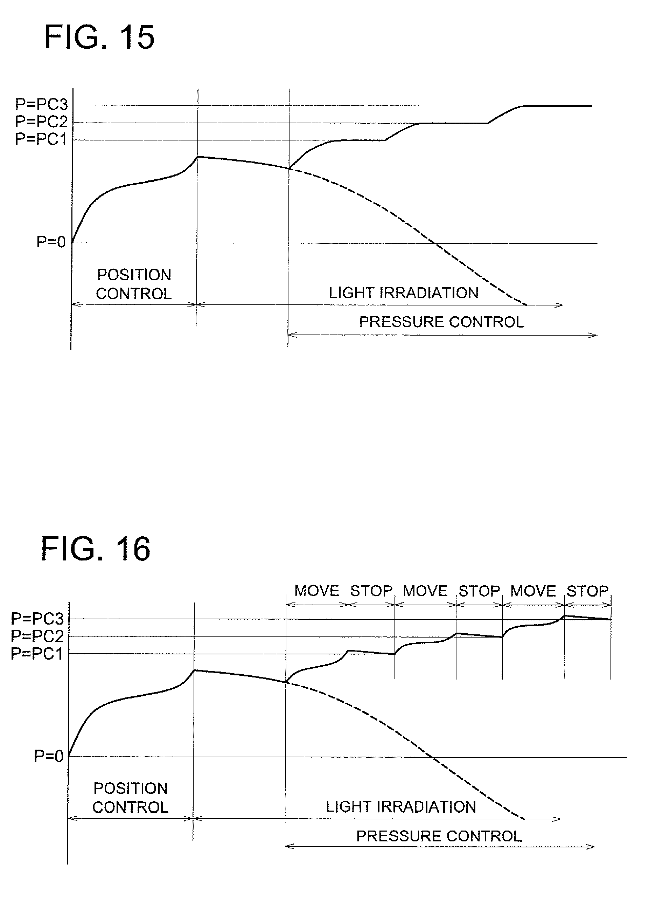

Further, as shown in Fig. 15, the predetermined pressure set up in the pressure control process may be set to pressure values formed in multiple stages as progress of the hardening of resin. Furthermore, the control method of the predetermined pressure is not limited to a method to control the predetermined pressure in a form of discontinuous straight lines as shown in Fig. 15, but also may be a method to control it continuously, for example, based on a pressure curve determined experientially beforehand.

Moreover, as shown in Fig. 16, the pressure control may be conducted in such a way that a predetermined amount of movement, that is, a ON and Off pressure control is conducted multiple times so as to make the pressure become close stepwise to a desired pressure value. With this method, it becomes possible to obtain the same effect as that in the method to conduct the control always referring a detected value of the pressure, that is, the same effect as shown in Fig. 15.

Still moreover, a table of desired pressure values is memorized beforehand, and the pressure may be controlled to become a corresponding pressure value with reference to the table based on a pressure value detected by the load cell.

With the precise control to conduct a pressure control so as to obtain an ideal pressure, high precise transfer is expectable.

### EXPLANATION OF REFERENCE SYMBOLS

- 1: Wafer Lens
- 3: Glass Substrate
- 5: Convex Lens Portion
- 5A: Resin
- 10: Master
- 12: Base Portion
- 14: Convex Portion
- 20: Sub Master
- 22: Molding Section
- 22A: Resin
- 24: Cavity
- 26: Base Material
- 30: Wafer Lens Manufacturing Apparatus
- 32: Base
- 34: Protrusion Portion
- 36: Guide
- 40: Stage
- 42: Through Hole
- 44: Load Cell
- 46: Concave section
- 50: Geared Motor
- 51: Potentiometer
- 52: Shaft
- 60: Parallel Making Member
- 62: XY Stage
- 64: θ Stage
- 70: Vacuum Chuck Device
- 72: Communicating Groove
- 80: Stamp Holder
- 82: Communicating Groove
- 90: Light Source
- 100: Control Apparatus
- 110: Vacuum Chuck Device
- 112: Communicating Groove

## Claims

1. A manufacturing apparatus of wafer lens having a plurality of lens portions made of a light hardenable resin on one surface of a substrate, and the manufacturing apparatus is **characterized by** comprising:
a molding die holding means for holding a molding die having a plurality of molding die surfaces corresponding to an optical surface configuration of the abovementioned lens portions;
a substrate holding means for holding the abovementioned substrate;
a resin arranging means for arranging a light hardenable resin on at least one of one surface of the substrate and the molding surfaces of the abovementioned molding die;
a moving means for moving the abovementioned molding die relatively to the one surface of the substrate;
a pressure detecting means for detecting a pressing force caused on the substrate by movement of moving means through the light hardenable resin arranged against the molding die;
a light irradiating means for irradiates light to advance the hardening of the light hardenable resin; and
a pressure control means for controlling the pressing force which changes in according with the hardening of the light hardenable resin which progresses with the light irradiation based on the detection result of the above-mentioned pressure detecting means.

2. The wafer lens manufacturing apparatus described in claim 1 is **characterized in that** the abovementioned pressure control means controls to hold the pressing force at a predetermined constant pressure value.

3. The wafer lens manufacturing apparatus described in claim 1 is **characterized in that** the abovementioned pressure control means controls to make the pressing force to a predetermined constant pressure value or less.

4. The wafer lens manufacturing apparatus described in any one of claims 1 to 3 is **characterized in that** the manufacturing installation comprises a position detecting means for detecting the position of the substrate, the relative position of the molding die to one surface of the substrate by the moving means is held at a predetermined position based on a detection result of the position detecting section, and the above-mentioned pressure control means conducts pressure control at the predetermined position.

5. The wafer lens manufacturing apparatus described in claim 1 is **characterized in that** the pressure control by the pressure control means is an ON and OFF control to control preliminarily-set multiple pressure values stepwise.

6. A manufacturing method of wafer lens having a plurality of lens portions formed by molding and hardening a light hardenable resin on one surface of a substrate, and the manufacturing method is **characterized by** comprising:
an arranging process for arranging a light hardenable resin on at least one of molding surfaces of a molding die having a plurality of molding surfaces corresponding to an optical configuration of the lens portions and one surface of the substrate;
a pressing process for pressing the substrate through the light hardenable resin arranged against the molding die by moving the molding die relatively against one surface of the substrate;
a light irradiating process for irradiating light to advance the hardening of the light hardenable resin; and
a pressure control process for controlling the pressing force in the pressing process which changes in according with the hardening of the light hardenable resin which progresses with the light irradiation.

7. The water lens manufacturing method described in claim 6 is **characterized in that** in the above-mentioned pressure control process, the pressing force is controlled so as to be held at a predetermined constant pressure value.

8. The wafer lens manufacturing method described in claim 6 is **characterized in that** in the above-mentioned pressure control process, the pressing force is controlled to be made to a predetermined constant pressure value or less.
